# EUROPÄISCHE PATENTANMELDUNG

(11) **EP 2 194 113 A1**
(43) Veröffentlichungstag der Anmeldung: **09.06.2010**
(21) Anmeldenummer: 09014890.9
(22) Anmeldetag: 01.12.2009
(51) Int. Cl.: C10M 105/14, F16F 9/00, C10N 40/08

(54) **Dämpfungssystem, Dämpfungsverfahren und Schmierstoff dafür**

(30) Priorität: 03.12.2008 DE 102008060365
(71) Anmelder: Peres, Laszlo, 85391 Allershausen (DE); Peres, Mathias, 85051 Ingolstadt (DE)
(72) Erfinder: Peres, Laszlo, 85391 Allershausen (DE); Peres, Mathias, 85051 Ingolstadt (DE)
(74) Vertreter: Kirchner, Veit

(57) **Zusammenfassung**

Dämpfungssystem mit einem Schmierstoff, der durch Strömung und/oder Bewegung eine Dämpfung bewirkt. Die Grundsubstanz des Schmierstoffs ist mit mehrwertigen Alkoholen gebildet. Verwendung von mehrwertigen Alkoholen als Schmierstoff für Dämpfungssysteme. Dämpfungsverfahren, bei dem eine Strömung und/oder Bewegung eines Schmierstoffs erzeugt wird, wobei als Grundsubstanz des Schmierstoffs mehrwertige Alkohole eingesetzt werden.

## Beschreibung

Die Erfindung betrifft ein Dämpfungssystem, z. B. zur Dämpfung von mechanischen Stößen oder Schwingungen, bei dem durch Strömung und/oder Bewegung eines Schmierstoffes eine Dämpfung bewirkt wird. Des weiteren betrifft die Erfindung die Verwendung von bestimmten Substanzen als Schmierstoff für solche Dämpfungssysteme sowie ein Verfahren zur Dämpfung unter Einsatz von bestimmten Substanzen als Schmierstoff.

Vorbekannte Dämpfungssysteme sind beispielsweise die im Kraftfahrzeugbau verwendeten Stoßdämpfer, die im Wesentlichen aus einem mit einem Schmierstoff befüllten Zylinder und einem darin an einer Kolbenstange geführten Kolben bestehen. Bei Bewegung des Kolbens gegenüber dem Zylinder muß der Schmierstoff durch enge Kanäle und/oder Ventile im Kolben strömen. Durch den damit verbundenen Strömungswiderstand wird eine Dämpfung bewirkt.

Bei vorbekannten Dämpfungssystemen der genannten Art werden Schmierstoffe eingesetzt, die als Grundsubstanz herkömmliche Öle aufweisen und beispielsweise auf Basis von Erdöl hergestellt werden. Die herkömmlichen Öle haben den Nachteil, daß die Dämpfwirkung durch Aufschäumen nachlassen kann. Ein weiterer Nachteil ist die Verknappung des Rohmaterials Erdöl.

Vor diesem Hintergrund ist es Aufgabe der vorliegenden Erfindung, einen verbesserten Schmierstoff bereitzustellen, der insbesondere nicht die vorgenannten Nachteile aufweist. Insbesondere soll der erfindungsgemäße Schmierstoff die Abhängigkeit vom Rohstoff Erdöl vermindern und verbesserte Dämpfeigenschaften aufweisen.

Erfindungsgemäß wird die Aufgabe gelöst durch ein Dämpfungssystem nach Anspruch 1, eine Verwendung nach Anspruch 6 und ein Dämpfungsverfahren nach Anspruch 11. Bevorzugte Ausgestaltungen ergeben sich aus den Unteransprüchen.

Das erfindungsgemäße Dämpfungssystem zeichnet sich dadurch aus, daß es einen Schmierstoff enthält, dessen Grundsubstanz mit mehrwertigen Alkoholen gebildet ist. Weiter sieht die Erfindung die Verwendung von mehrwertigen Alkoholen als Schmierstoff für Dämpfungssysteme vor. Dabei kann der Schmierstoff neben den mehrwertigen Alkoholen auch weitere Komponenten enthalten. Bei dem erfindungsgemäßen Verfahren zur Dämpfung von mechanischen Stößen oder Schwingungen wird eine Strömung und/oder Bewegung eines Schmierstoffs erzeugt und es wird ein Schmierstoff eingesetzt, der als Grundstoff mehrwertige Alkohole beinhaltet.

In bevorzugten Ausgestaltungen umfassen die als Schmierstoff eingesetzten mehrwertigen Alkohole das unter dem Trivialnamen "Glykol" bekannte 1,2-Ethandiol und/oder 1,2-Butandiol.

Vorzugsweise enthält der Schmierstoff mindestens 70 % Glykol, weiter vorzugsweise mindestens 80 % Glykol.

Zur weiteren Verbesserung der Material- und/oder Dämpfungseigenschaften können den mehrwertigen Alkoholen auch noch Additive beigemischt werden.

Mit dem erfindungsgemäßen Einsatz von mehrwertigen Alkoholen, insbesondere Glykol, im Dämpfungssystem kann ein spürbares Nachlassen der Dämpfwirkung vermieden werden, wie dies bei herkömmlichen Ölen durch Aufschäumen vorkommen kann. Des weiteren kann mit den mehrwertigen Alkoholen ein vergleichbares, wenn nicht gar - je nach Abstimmung - besseres Ansprechverhalten erreicht werden als mit herkömmlichen Ölen. Glykol weist in den relevanten Temperaturbereichen einen guten Viskositätsindex auf, wobei das Einsatztemperaturfenster durch die Beimischung von 1,2-Butandiol verbreitert werden kann. Darüber hinaus haben mehrwertige Alkohole eine gute Materialverträglichkeit im Dämpfungssystem. Schließlich sind mehrwertige Alkohole, insbesondere Glykol, auch in Zeiten sich verknappenden Erdöls vergleichsweise leicht zu beschaffen. Beispielsweise fällt Glycerin, eine verwandte Verbindung des Glykols, in großen Mengen bei der Herstellung von Rapsölmethylester ("RME" bzw. "Biodiesel") an. Ferner sind die erfindungsgemäßen Schmierstoffe auf Basis der mehrwertigen Alkohole sehr unweltverträglich und besonders gut entsorgbar.

Die Erfindung kann beispielsweise bei Stoß- und Lenkungsdämpfern in Fahrzeugen vorteilhaft eingesetzt werden. Möglich ist insbesondere auch der Einsatz in Telegabeln von Motorrädern. Für einen derartigen Einsatz ist es besonders vorteilhaft, wenn der Schmierstoff mindestens 70 % Glykol enthält, bzw. noch vorteilhafter, wenn er mindestens 80 % Glykol enthält.

Nach einem Ausführungsbeispiel der Erfindung, das bereits erfolgreich getestet wurde, wird Ethylenglykol in Form des Kühler-Frostschutzes "Glysantin" als Schmierstoff in Telegabeln und Stoßdämpfern von Motorrädern eingesetzt. Bei etwa 50 % Offroad- und 50 % Straßenbetrieb wurden Laufzeiten von ca. 10.000 km erreicht. Im Moto-Cross-Betrieb, der mit einer sehr hohen Beanspruchung der Dämpfungselemente einhergeht, konnte gegenüber herkömmlichen Schmierstoffen auf Öl-Basis in etwa die dreifache Laufdauer erreicht werden. Die dreimal so lange Haltbarkeit ist natürlich mit erheblichen Vorteilen verbunden, insbesondere weil der Wartungs- und Materialaufwand reduziert und die Umwelt geschont wird.

Insgesamt stellt die Erfindung durch den neuartigen Einsatz von mehrwertigen Alkoholen als Schmierstoff für Dämpfungssysteme eine Reihe von Vorteilen bereit, insbesondere verbesserte Dämpfeigenschaften und eine höhere Lebensdauer.

## Patentansprüche

1. Dämpfungssystem mit einem Schmierstoff, durch dessen Strömung und/oder Bewegung eine Dämpfung bewirkt wird, **dadurch gekennzeichnet, daß** die Grundsubstanz des Schmierstoffs mit mehrwertigen Alkoholen gebildet ist.

2. Dämpfungssystem nach Anspruch 1, **dadurch gekennzeichnet, daß** die mehrwertigen Alkohole Glykol umfassen.

3. Dämpfungssystem nach Anspruch 1 oder 2, **dadurch gekennzeichnet, daß** der Schmierstoff mindestens 70 % Glykol enthält.

4. Dämpfungssystem nach Anspruch 1 oder 2, **dadurch gekennzeichnet, daß** der Schmierstoff mindestens 80 % Glykol enthält.

5. Dämpfungssystem nach einem der Ansprüche 1 bis 4, **dadurch gekennzeichnet, daß** die mehrwertigen Alkohole 1,2-Butandiol umfassen.

6. Verwendung von mehrwertigen Alkoholen als Schmierstoff für Dämpfungssysteme.

7. Verwendung nach Anspruch 4, **dadurch gekennzeichnet, daß** die mehrwertigen Alkohole Glykol umfassen.

8. Verwendung nach Anspruch 6 oder 7, **dadurch gekennzeichnet, daß** der Schmierstoff mindestens 70 % Glykol enthält.

9. Verwendung nach Anspruch 6 oder 7, **dadurch gekennzeichnet, daß** der Schmierstoff mindestens 80 % Glykol enthält.

10. Verwendung nach einem der Ansprüche 6 bis 9, **dadurch gekennzeichnet, daß** die mehrwertigen Alkohole 1,2-Butandiol umfassen.

11. Verfahren zur Dämpfung von mechanischen Stößen oder Schwingungen, bei dem eine Strömung und/oder Bewegung eines Schmierstoffs erzeugt wird, **dadurch gekennzeichnet, daß** als Grundsubstanz des Schmierstoffs mehrwertige Alkohole eingesetzt werden.

12. Verfahren nach Anspruch 7, **dadurch gekennzeichnet, daß** die mehrwertigen Alkohole Glykol umfassen.

13. Verfahren nach Anspruch 11 oder 12, **dadurch gekennzeichnet, daß** der Schmierstoff mindestens 70 % Glykol enthält.

14. Verfahren nach Anspruch 11 oder 12, **dadurch gekennzeichnet, daß** der Schmierstoff mindestens 80 % Glykol enthält.

15. Verfahren nach einem der Ansprüche 11 bis 14, **dadurch gekennzeichnet, daß** die mehrwertigen Alkohole 1,2-Butandiol umfassen.
